# FASCICULE DE BREVET EUROPEEN

(11) **EP 1 285 812 B1**
(45) Date de publication et mention de la délivrance du brevet: **01.04.2009**
(21) Numéro de dépôt: 02291782.7
(22) Date de dépôt: 15.07.2002
(51) Int. Cl.: B60Q 1/06, B60Q 1/12, F21V 14/04

(54) **Appareil d'éclairage, notamment projecteur, automobile**
KFZ-Beleuchtungseinrichtung, insbesondere Scheinwerfer
Vehicle lighting device, in particular headlight

(30) Priorité: 21.08.2001 FR 0111062
(43) Date de publication de la demande: 26.02.2003
(73) Titulaire: VALEO VISION, 93012 Bobigny Cedex (FR)
(72) Inventeur: Moisy, Eric, 93190 Livry Gargan (FR); Chave, Rémy, 75007 Paris (FR)
(74) Mandataire: Renous Chan, Véronique

(56) Documents cités:
- DE-A- 2 936 993
- DE-A- 3 616 694
- US-A- 4 866 577
- US-A- 5 077 641
- US-A- 5 337 223

## Description

L'invention est relative à un appareil d'éclairage automobile, notamment un projecteur, comportant un ensemble mobile muni d'un réflecteur et d'une source lumineuse, et un ensemble fixe bordant au moins partiellement l'ensemble mobile, notamment par un masque et/ou un enjoliveur, l'ensemble mobile pouvant tourner, relativement à l'ensemble fixe, autour d'un premier axe vertical pour un réglage en azimut, et autour d'un axe transversal horizontal pour un réglage en site. Un tel appareil est connu du document US-A-5 077 641.

Les mentions "axe vertical" et "axe horizontal" sont à comprendre pour un appareil d'éclairage installé sur un véhicule qui se trouve sur un sol horizontal.

Le réglage en azimut de l'appareil s'effectue généralement en usine et a pour but de caler correctement le plan moyen vertical du faisceau lumineux par rapport à l'axe longitudinal du véhicule. Ce réglage en azimut est de faible amplitude , et n'est en principe plus modifié par la suite.

Le réglage en site vise à assurer une inclinaison correcte, par rapport au sol, de l'axe du faisceau lumineux pour éviter l'éblouissement du conducteur d'un véhicule venant en sens inverse. Ce réglage peut être statique (effectué manuellement selon la répartition de la charge du véhicule) ou dynamique grâce à une commande automatique prévue pour actionner un moteur électrique, par exemple de type pas-à-pas, qui maintient l'angle de site du faisceau lumineux à une valeur constante relativement à la route, malgré les variations possibles de l'assiette du véhicule.

Une fonction désignée par AFS (Adaptive Front lighting System) est de plus en plus fréquemment demandée dans l'appareil d'éclairage. Cette fonction AFS assure une rotation du réflecteur et de la source lumineuse autour d'un deuxième axe vertical, en réponse à la rotation du volant du véhicule, afin de bien orienter le faisceau lumineux suivant la trajectoire du véhicule dans un virage. Le deuxième axe vertical peut être différent du premier axe vertical ou confondu avec lui.

Pour permettre les déplacements de l'ensemble mobile vis-à-vis de l'ensemble fixe, des jeux doivent être prévus créant des fentes entre les bords voisins des ensembles.

Dans les appareils d'éclairage actuels, lors du déplacement de l'ensemble mobile relativement à l'ensemble fixe, la valeur des jeux peut varier d'un minimum à un maximum. Cette variation constitue une contrainte gênante à prendre en considération lors de la conception de l'appareil. En outre, cette variation est préjudiciable d'un point de vue esthétique et entraîne un aspect différent de l'appareil pour les différentes positions de l'ensemble mobile.

L'invention a pour but, surtout, de fournir un appareil d'éclairage automobile dans lequel les jeux entre ensembles mobile et fixe restent constants ou quasiment constants, notamment lors du réglage en site . Il est souhaitable que la construction reste simple et économique.

Selon l'invention, un appareil d'éclairage automobile comportant un ensemble mobile muni d'un réflecteur et d'une source lumineuse, et un ensemble fixe, l'ensemble mobile étant réglable en azimut autour d'un premier axe vertical et en site autour d'un axe horizontal transversal , est caractérisé par le fait que l'ensemble mobile comporte, sur au moins une partie en regard de l'ensemble fixe, une paroi de révolution autour de l'axe transversal horizontal de réglage en site , et l'ensemble fixe comporte en regard de ladite paroi de révolution un bord parallèle à la méridienne de cette paroi, l'étendue angulaire de la paroi de révolution étant suffisante pour qu'elle reste en regard du bord de l'ensemble fixe sur toute l'étendue angulaire possible du réglage en site.

De préférence, l'ensemble fixe comporte en regard de la paroi de révolution une surface de révolution autour du même axe horizontal transversal .

La méridienne de la paroi de révolution peut comprendre au moins un segment rectiligne, parallèle à l'axe transversal, engendrant une zone cylindrique de révolution. Une telle zone cylindrique de révolution peut être prévue de chaque côté d'une zone centrale de l'ensemble mobile. La zone centrale peut être cylindrique à génératrices orthogonales à l'axe transversal horizontal. La zone centrale correspondante de l'ensemble fixe peut être formée par une zone concave torique de révolution.

Avantageusement, lorsque l' appareil d'éclairage comporte la fonction AFS, l'ensemble mobile comprend un boîtier monté rotatif autour de l'axe horizontal transversal pour le réglage en site; le réflecteur avec la source lumineuse et une optique de sortie éventuelle sont disposés à l'intérieur du boîtier et montés rotatifs, relativement à ce boîtier, autour du deuxième axe vertical .

Le boîtier présente une fenêtre, pour le passage du faisceau lumineux, d'étendue angulaire autour du deuxième axe vertical suffisante pour permettre la rotation maximale du réflecteur avec la source lumineuse et l'optique de sortie sans occulter, même partiellement, le faisceau lumineux .

Avantageusement une coiffe liée au réflecteur est prévue autour de l'optique de sortie, cette coiffe étant de révolution autour du deuxième axe vertical, la paroi du boîtier en regard de la coiffe étant parallèle à la méridienne de la coiffe.

La coiffe peut être une portion de paroi sphérique dont le centre est situé sur le deuxième axe vertical, la paroi du boîtier en regard étant constituée par une paroi sphérique concentrique et parallèle à la précédente, mais située radialement vers l'extérieur.

Avantageusement, le boîtier est situé au-dessus de la paroi de révolution centrée sur l'axe transversal horizontal.

L'invention consiste, mises à partir les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

Sur ces dessins :
Fig.1 est un schéma en perspective illustrant le montage réglable d'un réflecteur de projecteur automobile classique.
Fig.2 est une vue de face d'un projecteur selon l'invention .
Fig.3 est une coupe verticale partielle, à plus grande échelle, suivant la ligne III-III de Fig.2 .
Fig.4 est une coupe schématique verticale, à plus grande échelle, suivant la ligne IV-IV de Fig.2 .
Fig.5 est une coupe schématique, à plus grande échelle, suivant la ligne V-V de Fig.2.
Fig.6 enfin est une vue schématique partielle de l'avant, en perspective, d'une variante du projecteur de Fig.2.

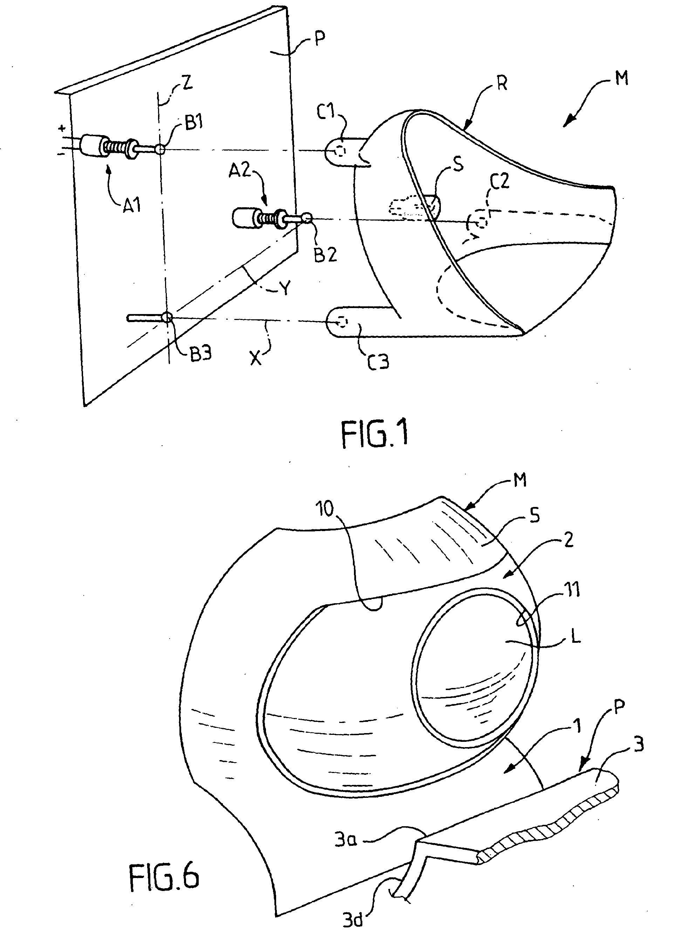

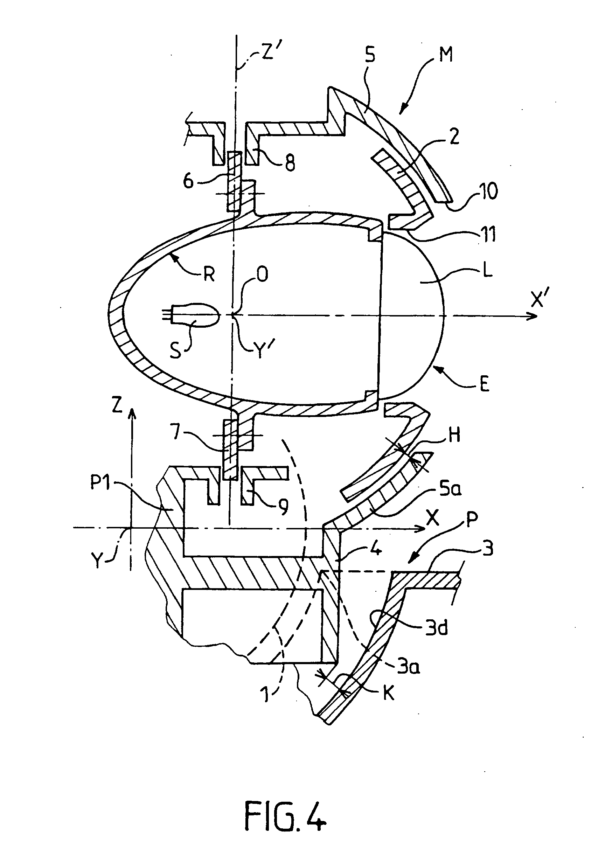

En se reportant à Fig.1, on peut voir, schématiquement représenté, un réflecteur R faisant partie de l'ensemble mobile M d'un projecteur automobile , ou plus généralement d' un appareil d'éclairage ou de signalisation automobile. Le réflecteur R de Fig.1 est constitué par une coque, par exemple en forme de paraboloïde ou d'ellipsoïde d'axe horizontal, tournant sa concavité vers la droite de Fig.1. La coque est limitée, au niveau inférieur, par une paroi horizontale . Cet exemple de réflecteur classique n'est pas limitatif, un autre exemple étant donné sur Fig.4. Le réflecteur R est équipé d'une source lumineuse S.

Le maintien du réflecteur R relativement à un ensemble fixe P, symboliquement représenté sur Fig.1, est assuré en trois points par trois capsules B1, B2, B3, généralement constituées par des boules sphériques coopérant avec des logements correspondants prévus dans des pattes C1,C2,C3 solidaires de la paroi arrière du réflecteur R. Les deux capsules B1, B3 ont leurs centres situés sur un axe Z qui est vertical lorsque l'on considère un projecteur installé dans un véhicule se trouvant sur un sol horizontal. Les capsules B2, B3 ont leurs centres situés sur un axe Y horizontal transversal. Le terme "transversal" désigne une direction orthogonale au plan formé par l'axe Z et par un axe X passant par le centre de B3 et parallèle à l'axe longitudinal du véhicule. La capsule B3 est fixe par rapport à l'ensemble P. La capsule B2 peut être déplacée parallèlement à l'axe X à l'aide d'un moyen de réglage manuel A2. Ce réglage est effectué en usine et permet d'ajuster l'azimut du faisceau lumineux, c'est-à-dire l'angle du plan moyen vertical longitudinal avec la direction de l'axe longitudinal du véhicule.

La capsule B1 peut être déplacée dans le plan vertical, parallèlement à l'axe X, à l'aide d'un moyen de réglage A1. Ce déplacement de la capsule B1 provoque un basculement du réflecteur R autour de l'axe horizontal transversal Y. Il en résulte une modification de l'angle de site du faisceau lumineux c'est-à-dire de l'angle de ce faisceau par rapport au sol sur lequel roule le véhicule. Le moyen de réglage A1 peut être manuel ou peut être automatique avec un moteur électrique, notamment du type pas-à-pas, commandé par un capteur sensible à l'assiette du véhicule afin de maintenir constant l'angle de site malgré les variations d'assiette du véhicule. Le réglage de l'angle de site a pour but d'éviter l'éblouissement du conducteur d'un véhicule venant en sens inverse.

Selon l'exemple de Fig.1 le réflecteur R est fixé directement sur les capsules B1, B2 et B3. Lorsqu'une fonction AFS est prévue, un support intermédiaire P1 (Fig.4) est généralement fixé sur les capsules B1, B2 et B3, et le réflecteur R est monté rotatif autour du deuxième axe vertical Z' sur ce support intermédiaire P1.

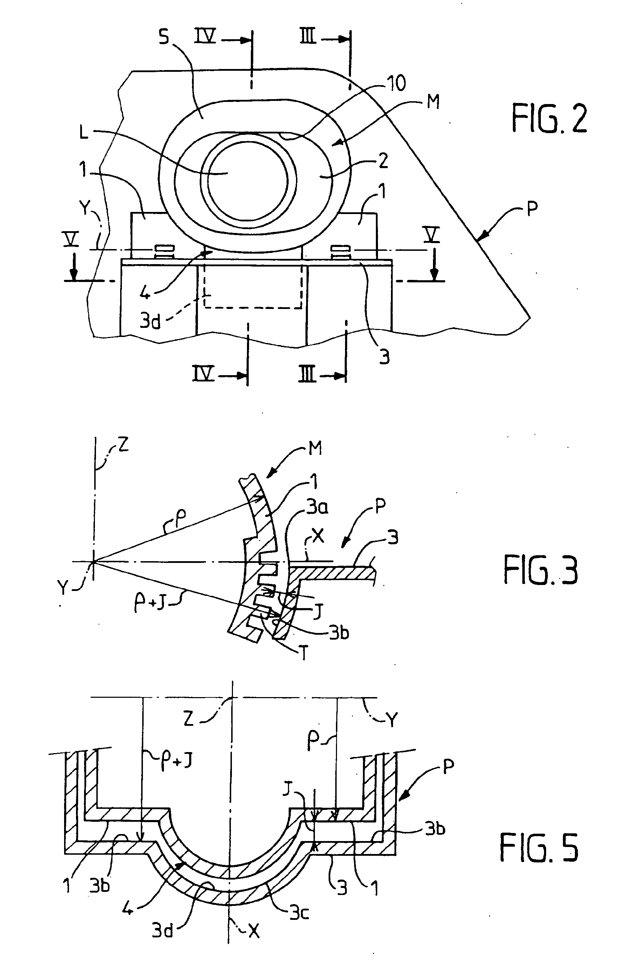

En se reportant aux Figures 2 et 3, on peut voir que, selon l'invention, l'ensemble mobile M comporte en partie basse de part et d'autre transversalement d'une optique de sortie L du projecteur, une paroi 1 de révolution autour de l'axe transversal horizontal Y de réglage en site. Le rayon extérieur de la paroi 1 est désigné par ρ. Une coiffe 2 (Fig.2) , dont il sera question plus loin, entoure l'optique L.

L'ensemble fixe P comporte, en regard de la paroi de révolution 1, une pièce 3 (Fig.3) avec un bord 3a parallèle à la méridienne de la paroi 1. On rappelle que la méridienne est l'intersection d'une surface de révolution avec un plan passant par l'axe de cette surface ; la rotation de la méridienne autour de l'axe engendre la surface de révolution.

Une solution simple consiste, comme représenté sur Fig.2 et 3, à prévoir une paroi de révolution 1 admettant pour méridienne un segment de droite parallèle à l'axe Y. Dans ces conditions, la paroi 1 est formée par une portion de cylindre de révolution d'axe Y. Le bord 3a est formé par un segment de droite parallèle à l'axe Y. Le jeu J entre la paroi 1 et le bord 3a restera constant lors du réglage en site et de la rotation de la pièce 1 autour de l'axe Y. Des dents T séparées par des rainures par exemple parallèles à l'axe Y peuvent être prévues à la surface de la paroi 1 pour en améliorer l'esthétique.

Avantageusement, la pièce 3 comporte une surface 3b dirigée vers le bas à partir du bord 3a, formant une sorte de bavette. La surface 3b est également de révolution autour de l'axe transversal Y, de rayon intérieur égal à ρ +J. La surface 3b est parallèle à la paroi 1. Le jeu J reste constant entre la paroi 1 et la surface 3b.

L'exemple de méridienne constituée par un segment de droite n'est pas limitatif. Une méridienne formée par une courbe est possible.

Comme visible sur Fig.2 une paroi cylindrique de révolution 1 est prévue en partie basse de l'ensemble mobile M de chaque côté d'une zone centrale 4. Cette zone centrale 4 est constituée, dans l'exemple représenté, par une portion de cylindre de génératrices orthogonales à l'axe Y , avec concavité orientée vers l'axe Z.

A cette zone centrale 4 correspond sur la pièce 3 un arc de cercle 3c tournant sa concavité vers l'axe Z. L'arc de cercle 3c correspond à l'intersection par un plan passant par l'axe Y d'une zone concave torique 3d engendrée par la révolution de l'arc 3c autour de l'axe Y.

Comme visible sur Fig.4, la partie inférieure de la zone centrale 4 se trouve à une distance K de la surface intérieure de la zone torique 3d . La distance K correspond à un jeu permettant le déplacement. Lors de la rotation de l'ensemble mobile M et de la paroi 1 autour de l'axe Y, cette distance K reste constante puisque la surface intérieure de la zone 3d fixe est de révolution autour de l'axe Y.

Pour assurer la fonction AFS, l'ensemble mobile M comprend, comme visible sur Fig.2 et 4, un boîtier 5 solidaire du support P1 rotatif autour de l'axe transversal Y. Une paroi de révolution 1 forme, de chaque côté de la zone centrale 4, la partie basse du boîtier 5.

Le réflecteur R avec la source lumineuse S et l'optique de sortie L est monté rotatif à l'intérieur du boîtier 5, relativement à ce boîtier, autour du deuxième axe vertical Z'. Dans l'exemple de Fig.4, l'ensemble (réflecteur R, source S et optique de sortie L) est formé par un elliptique E comprenant une enveloppe sensiblement en forme d'ellipsoïde de révolution munie de deux pions cylindriques opposés, alignés 6, 7. Ces pions 6, 7 sont montés rotatifs dans des paliers respectifs 8, 9 solidaires du support intermédiaire P1 et de la paroi 1. Les paliers 8 et 9 peuvent être constitués de paliers proprement dits, de roulements à billes ou de tout autre système permettant la rotation libre des pions 6 et 7. L'axe géométrique commun des paliers 8, 9 est confondu avec le deuxième axe vertical Z' de rotation.

Le boîtier 5 présente une fenêtre 10, de forme allongée dans la direction horizontale (Fig.2), dont l'étendue angulaire autour du deuxième axe vertical Z' est supérieure à l'amplitude de rotation maximale de l'optique de sortie L. Le faisceau lumineux peut ainsi effectuer le balayage complet correspondant à la fonction AFS sans être occulté, même partiellement, par le bord de la fenêtre 10.

La coiffe 2 liée au réflecteur R est prévue autour de l'optique de sortie L. Cette coiffe 2 est formée par une paroi, généralement opaque, de révolution autour du deuxième axe vertical Z'. La paroi du boîtier 5 en regard de la coiffe 2 est parallèle à la méridienne de la coiffe de sorte que le jeu H entre la coiffe 2 située à l'intérieur du boîtier 5 et la surface intérieure de ce boîtier restera constant lors de la rotation de la coiffe 2 autour de l'axe Z' relativement au boîtier 5.

Avantageusement, la coiffe 2 admet comme méridienne un arc de cercle dont le centre est situé à l'intersection O de l'axe Z' et de l'axe X' du réflecteur R. La coiffe 2 est alors formée par une portion de paroi sphérique centrée sur le point O. La paroi du boîtier 5 en regard de la coiffe 2 est formée par une paroi sphérique de même centre O, avec un rayon intérieur supérieur de la distance H au rayon extérieur de la coiffe 2.

L'optique de sortie L, généralement en forme de dôme hémisphérique, fait saillie à travers une ouverture 11 de la coiffe 2 et à travers l'ouverture 10 du boîtier 5.

La partie inférieure Sa de la zone avant du boîtier 5 sphérique, lorsqu'il est abaissé relativement à la pièce 3 par suite d'un réglage en site autour de l'axe Y, peut s'engager dans l'évidement de la partie torique 3d, sans interférence avec la pièce 3.

Fig.6 montre en perspective une variante de réalisation dans laquelle la partie inférieure de l'ensemble mobile M est constituée sur toute son étendue transversale par une paroi cylindrique de révolution 1 sans interruption au niveau de la zone centrale. Le bord 3a de la pièce 3 est rectiligne et ne comporte plus d'échancrure correspondant à l'arc de cercle 3c de Fig.5.

Ceci étant, les différents mouvements d'un projecteur selon l'invention sont les suivants.

Lors d'un réglage en site, le boîtier 5 et la paroi de révolution 1 basculent autour de l'axe transversal Y. Le jeu J (Fig.3) entre la paroi de révolution 1 et la paroi en regard 3b reste constant. Le jeu K (Fig.4) reste constant également. La zone concave 3d de la pièce 3 permet de recevoir la partie inférieure Sa du boîtier sphérique 5.

La rotation du volant du véhicule provoque, selon la fonction AFS, la rotation de la coiffe 2 et de l'optique L autour du deuxième axe vertical Z'. L'optique L peut balayer horizontalement la fenêtre 10, le boîtier 5 restant immobile par rapport à l'ensemble fixe P. Le jeu H (Fig.4) entre la coiffe 2 et le boîtier 5 reste constant au cours de ce balayage.

L'axe Z' peut être confondu avec l'axe Z. Le boîtier 5 peut alors être réalisé sous forme d'une sphère centrée sur l'intersection de l'axe Y et de l'axe Z.

Les différentes pièces des ensembles fixe et mobile sont avantageusement réalisées en matériaux moulés ou injectés, tels que de la matière plastique, de l'aluminium, etc...

## Revendications

1. Appareil d'éclairage automobile, notamment projecteur, comportant un ensemble mobile (M) muni d'un réflecteur (R) et d'une source lumineuse (S), et un ensemble fixe (P) bordant au moins partiellement l'ensemble mobile qui peut tourner, relativement à l'ensemble fixe, autour d'un premier axe vertical (Z) pour un réglage en azimut, et autour d'un axe transversal horizontal (Y) pour un réglage en site,
**caractérisé par le fait que** l'ensemble mobile (M) comporte, sur au moins une partie en regard de l'ensemble fixe, une paroi de révolution (1) autour de l'axe transversal horizontal (Y) de réglage en site , et l'ensemble fixe (P) comporte en regard de ladite paroi de révolution (1) un bord (3a) parallèle à la méridienne de cette paroi, l'étendue angulaire de la paroi de révolution étant suffisante pour qu'elle reste en regard du bord de l'ensemble fixe sur toute l'étendue angulaire possible du réglage en site.

2. Appareil d'éclairage selon la revendication 1, **caractérisé par le fait que** l'ensemble fixe (P) comporte en regard de la paroi de révolution (1) une surface de révolution (3d) autour du même axe horizontal transversal (Y) .

3. Appareil d'éclairage selon la revendication 1 ou 2, **caractérisé par le fait que** la méridienne de la paroi de révolution (1) comprend au moins un segment rectiligne, parallèle à l'axe transversal (Y), engendrant une zone cylindrique de révolution (1).

4. Appareil d'éclairage selon la revendication 3, **caractérisé par le fait qu'** une zone cylindrique de révolution (1) est prévue de chaque côté d'une zone centrale (4) de l'ensemble mobile (M).

5. Appareil d'éclairage selon la revendication 4, **caractérisé par le fait que** la zone centrale (4) est cylindrique à génératrices orthogonales à l'axe transversal horizontal (Y).

6. Appareil d'éclairage selon la revendication 5, **caractérisé par le fait que** la zone centrale de l'ensemble fixe correspondant à la zone centrale (4) de l'ensemble mobile (M) est formée par une zone concave torique de révolution (3d).

7. Appareil d'éclairage selon l'une des revendications précédentes comportant une fonction AFS, **caractérisé par le fait que** l'ensemble mobile (M) comprend un boîtier (5) monté rotatif autour de l'axe horizontal transversal (Y) pour le réglage en site, que le réflecteur (R) avec la source lumineuse (S) sont disposés à l'intérieur du boîtier et montés rotatifs, relativement à ce boîtier, autour d'un deuxième axe vertical (Z').

8. Appareil d'éclairage selon la revendication 7, **caractérisé par le fait que** le boîtier (5) présente une fenêtre (10), pour le passage du faisceau lumineux, d'étendue angulaire autour du deuxième axe vertical (Z') suffisante pour permettre la rotation maximale du réflecteur (R) avec la source lumineuse (S) et une optique de sortie (L) sans occulter, même partiellement, le faisceau lumineux.

9. Appareil d'éclairage selon la revendication 7 ou 8, **caractérisé par le fait qu'** une coiffe (2) liée au réflecteur (R) est prévue autour de l'optique de sortie (L), cette coiffe (2) étant de révolution autour du deuxième axe vertical (Z'), la paroi du boîtier (5) en regard de la coiffe (2) étant parallèle à la méridienne de la coiffe.

10. Appareil d'éclairage selon la revendication 9, **caractérisé par le fait que** la coiffe (2) est une portion de paroi sphérique dont le centre (O) est situé sur le deuxième axe vertical (Z'), la paroi du boîtier (5) en regard étant constituée par une paroi sphérique concentrique et parallèle à la précédente, mais située radialement vers l'extérieur.

11. Appareil d'éclairage selon l'une des revendications 7 à 10, **caractérisé par** le fait le boîtier (5) est situé au-dessus de la paroi (1) de révolution autour de l'axe transversal horizontal (Y).

## Claims

1. Motor vehicle lighting device, in particular a headlight, comprising a mobile assembly (M) which is provided with a reflector (R) and a source of light (S), and a fixed assembly (P) which borders at least partially the mobile assembly which can rotate, relative to the fixed assembly, around a first vertical axis (Z) for regulation of the azimuth, and around a horizontal transverse axis (Y) for regulation of the elevation angle,
**characterised in that** the mobile assembly (M) comprises, on at least a part opposite the fixed assembly, a wall of revolution (1) around the horizontal transverse axis (Y) for regulation of the elevation angle, and the fixed assembly (P) comprises opposite the said wall of revolution (1) an edge (3a) parallel to the meridian of this wall, the angular extent of the wall of revolution being sufficient for it to remain opposite the edge of the fixed assembly along the entire possible angular extent of the regulation of the elevation angle.

2. Lighting device according to claim 1, **characterised in that** the fixed assembly (P) comprises opposite the wall of revolution (1) a surface of revolution (3d) around the same horizontal transverse axis (Y).

3. Lighting device according to claim 1 or claim 2, **characterised in that** the meridian of the wall of revolution (1) comprises at least one straight segment, parallel to the transverse axis (Y), which generates a cylindrical area of revolution (1).

4. Lighting device according to claim 3, **characterised in that** a cylindrical area of revolution (1) is provided on each side of a central area (4) of the mobile assembly (M).

5. Lighting device according to claim 4, **characterised in that** the central area (4) is cylindrical with generatrices at right-angles to the horizontal transverse axis (Y).

6. Lighting device according to claim 5, **characterised in that** the central area of the fixed assembly corresponding to the central area (4) of the mobile assembly (M) is formed by a toric concave area of revolution (3d).

7. Lighting device according to one of the preceding claims, comprising an AFS function, **characterised in that** the mobile assembly (M) comprises a case (5) which is fitted such as to rotate around the horizontal transverse axis (Y) for regulation of the elevation angle, and the reflector (R) and the source of light (S) are disposed inside the case and are fitted such as to rotate relative to this case, around a second vertical axis (Z').

8. Lighting device according to claim 7, **characterised in that** the case (5) has a window (10) for passage of the light beam, of an angular extent around the second vertical axis (Z') which is sufficient to permit maximal rotation of the reflector (R) with the source of light (S) and output optics (L), without occulting the light beam even partially.

9. Lighting device according to claim 7 or claim 8, **characterised in that** a cover (2) which is connected to the reflector (R) is provided around the output optics (L), this cover (2) being of revolution around the second vertical axis (Z'), the wall of the case (5) opposite the cover (2) being parallel to the meridian of the cover.

10. Lighting device according to claim 9, **characterised in that** the cover (2) is a portion of spherical wall, the centre (O) of which is situated on the second vertical axis (Z'), the wall of the case (5) opposite being constituted by a spherical wall which is concentric and parallel to the preceding one, but is situated radially towards the exterior.

11. Lighting device according to one of claims 7 to 10, **characterised in that** the case (5) is situated above the wall (1) of revolution around the horizontal transverse axis (Y).

## Patentansprüche

1. Kraftfahrzeugbeleuchtungseinrichtung, insbesondere Scheinwerfer, mit einer beweglichen Einheit (M), die mit einem Reflektor (R) und einer Lichtquelle (S) versehen ist, und einer feststehenden Einheit (P), die wenigstens zum Teil an die bewegliche Einheit, die sich bezüglich der feststehenden Einheit zur Azimutwinkel-Einstellung um eine erste Vertikalachse (Z) und zur Höhenwinkel-Einstellung um eine horizontale Querachse (Y) drehen kann, angrenzt,
**dadurch gekennzeichnet, dass** die bewegliche Einheit (M) an wenigstens einem Teil gegenüber der feststehenden Einheit eine Rotationswand (1) um die horizontale Querachse (Y) herum zur Einstellung des Höhenwinkels umfasst, und die feststehende Einheit (P) gegenüber der Rotationswand (1) einen Rand (3a) parallel zur Meridianlinie dieser Wand aufweist, wobei die Winkelerstreckung der Rotationswand dafür ausreicht, dass diese über die gesamte mögliche Winkelerstreckung der Höhenwinkel-Einstellung gegenüber dem Rand der feststehenden Einheit verbleibt.

2. Beleuchtungseinrichtung nach Anspruch 1,
**dadurch gekennzeichnet, dass** die feststehende Einheit (P) gegenüber der Rotationswand (1) eine Rotationsfläche (3d) um dieselbe horizontale Querachse (Y) herum aufweist.

3. Beleuchtungseinrichtung nach Anspruch 1 oder 2,
**dadurch gekennzeichnet, dass** die Meridianlinie der Rotationswand (1) parallel zur Querachse (Y) wenigstens einen geraden Abschnitt aufweist, der einen zylindrischen Rotationsbereich (1) bildet.

4. Beleuchtungseinrichtung nach Anspruch 3,
**dadurch gekennzeichnet, dass** ein zylindrischer Rotationsbereich (1) auf jeder Seite eines mittleren Bereichs (4) der beweglichen Einheit (M) vorgesehen ist.

5. Beleuchtungseinrichtung nach Anspruch 4,
**dadurch gekennzeichnet, dass** der mittlere Bereich (4) zylindrisch ist, mit zur horizontalen Querachse (Y) orthogonalen Erzeugenden.

6. Beleuchtungseinrichtung nach Anspruch 5,
**dadurch gekennzeichnet, dass** der mittlere Bereich der feststehenden Einheit, der mit dem mittleren Bereich (4) der beweglichen Einheit (M) korrespondiert, durch einen konkaven, torischen Rotationsbereich (3d) gebildet ist.

7. Beleuchtungseinrichtung nach einem der vorhergehenden Ansprüche, mit einem adaptiven Frontbeleuchtungssystem AFS,
**dadurch gekennzeichnet, dass** die bewegliche Einheit (M) ein Gehäuse (5) umfasst, das zur Einstellung des Höhenwinkels um die horizontale Querachse (Y) drehbar montiert ist, dass der Reflektor (R) mit der Lichtquelle (S) innen im Gehäuse angeordnet und bezüglich des Gehäuses um eine zweite Vertikalachse (Z') drehbar montiert ist.

8. Beleuchtungseinrichtung nach Anspruch 7,
**dadurch gekennzeichnet, dass** das Gehäuse (5) zum Hindurchführen des Lichtbündels ein Fenster (10) aufweist, dessen Winkelerstreckung um die zweite Vertikalachse (Z') dafür ausreicht, die maximale Drehung des Reflektors (R) mit der Lichtquelle (S) und einer Austrittsoptik (L) zuzulassen, ohne hierbei das Lichtbündel auch nur teilweise abzuschatten.

9. Beleuchtungseinrichtung nach Anspruch 7 oder 8,
**dadurch gekennzeichnet, dass** eine mit dem Reflektor (R) verbundene Kappe (2) um die Austrittsoptik (L) herum vorgesehen ist, wobei die Kappe (2) rotationsförmig um die zweite Vertikalachse (Z') angeordnet ist, wobei die Wand des Gehäuses (5) gegenüber der Kappe (2) zur Meridianlinie der Kappe parallel ist.

10. Beleuchtungseinrichtung nach Anspruch 9,
**dadurch gekennzeichnet, dass** die Kappe (2) ein sphärisches Wandstück ist, dessen Mittelpunkt (O) auf der zweiten Vertikalachse (Z') liegt, wobei die gegenüberliegende Wand des Gehäuses (5) von einer zu dieser konzentrischen, sphärischen und parallelen, jedoch radial nach außen angeordneten Wand gebildet ist.

11. Beleuchtungseinrichtung nach einem der Ansprüche 7 bis 10,
**dadurch gekennzeichnet, dass** das Gehäuse (5) oberhalb der um die horizontale Querachse (Y) herum angeordneten Rotationswand (1) liegt.
